# EUROPEAN PATENT APPLICATION

(11) **EP 4 712 646 A1**
(43) Date of publication of application: **18.03.2026**
(21) Application number: 23936164.5
(22) Date of filing: 11.05.2023
(51) Int. Cl.: H04W 72/21, H04W 24/10

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: LI, Yanhua, Beijing 100085 (CN)
(74) Representative: Gunzelmann, Rainer
(86) International application number: PCT/CN2023/093698
(87) International publication number: WO 2024/229850

(57) **Abstract**

Embodiments of the present disclosure provide an information processing method and apparatus, a communication device and a storage medium. The information processing method is executed by a terminal, and comprises: sending UL jitter information to a network device, wherein the UL jitter information is used for indicating UL jitter.

## Description

### TECHNICAL FIELD

The present disclosure relates to the field of wireless communication technology, and specifically to an information processing method and apparatus, a communication device, and a storage medium.

### BACKGROUND

In the field of wireless communication technology, extended reality (XR) services are increasingly being used. XR services involve at least one data stream, and if the at least one data stream cannot be transmitted to a receiving end within a specified time or multiple data streams cannot reach the receiving end synchronously, jitter will occur. The jitter will lead to poor quality of service (QoS) of the XR services.

### SUMMARY

Embodiments of the present disclosure provide an information processing method and apparatus, a communication device, and a storage medium.

According to a first aspect of the embodiments of the present disclosure, an information processing method is provided. The method is performed by a terminal and includes:
sending Uplink (UL) jitter information to a network device, in which the UL jitter information indicates UL jitter.

According to a second aspect of the embodiments of the present disclosure, an information processing method is provided. The method is performed by a network device and includes:
receiving Uplink (UL) jitter information sent by a terminal, in which the UL jitter information indicates UL jitter.

According to a third aspect of the embodiments of the present disclosure, an information processing apparatus is provided, including:
a first sending module, configured to send Uplink (UL) jitter information to a network device, in which the UL jitter information indicates UL jitter.

According to a fourth aspect of the embodiments of the present disclosure, an information processing apparatus is provided, including:
a second receiving module, configured to receive Uplink (UL) jitter information sent by a terminal, in which the UL jitter information indicates UL jitter.

According to a fifth aspect of the embodiments of the present disclosure, a communication device is provided, including: a processor, a transceiver, a memory, and an executable program stored in the memory and capable of being executed by the processor, in which the processor performs the information processing method according to the first aspect or the second aspect when executing the executable program.

According to a sixth aspect of the embodiments of the present disclosure, a computer storage medium having a computer-executable program stored thereon is provided. When the executable program is executed by a processor, the information processing method according to the first aspect or the second aspect is implemented.

The technical solution provided by the embodiments of the present disclosure may have the following beneficial effects.

In the embodiments of the present disclosure, the terminal sends the UL jitter information to the network device, and the UL jitter information indicates the UL jitter, which facilitates the network device to know a UL jitter situation according to the UL jitter information, and facilitates the network device to perform resource scheduling and/or QoS parameter configuration based on the UL jitter, thereby relieving the problem of poor communication quality caused by UL jitter and improving communication quality.

Regarding the technical solutions provided by the embodiments of the present disclosure, it should be understood that the above general description and the following detailed description are merely exemplary and explanatory and should not limit the embodiments of the present disclosure.

### BRIEF DESCRIPTION OF THE DRAWINGS

The accompanying drawings herein are incorporated in and constitute a part of the specification, illustrate embodiments consistent with the embodiments of the present disclosure, and together with the description, serve to explain principles of the embodiments of the present disclosure.
FIG. 1 is a schematic diagram of a wireless communication system according to an embodiment of the present disclosure;
FIG. 2 is a flowchart of an information processing method according to an embodiment of the present disclosure;
FIG. 3 is a flowchart of an information processing method according to an embodiment of the present disclosure;
FIG. 4 is a flowchart of an information processing method according to an embodiment of the present disclosure;
FIG. 5 is a flowchart of an information processing method according to an embodiment of the present disclosure;
FIG. 6 is a flowchart of an information processing method according to an embodiment of the present disclosure;
FIG. 7 is a flowchart of an information processing method according to an embodiment of the present disclosure;
FIG. 8 is a flowchart of an information processing method according to an embodiment of the present disclosure;
FIG. 9 is a block diagram of an information processing apparatus according to an embodiment of the present disclosure;
FIG. 10 is a block diagram of an information processing apparatus according to an embodiment of the present disclosure;
FIG. 11 is a block diagram of a terminal according to an embodiment of the present disclosure; and
FIG. 12 is a block diagram of a communication device according to an embodiment of the present disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the present disclosure. Instead, they are merely examples of devices and methods consistent with aspects related to the present disclosure as recited in some aspects of the embodiments of the present disclosure.

The terms used in embodiments of the present disclosure are only for the purpose of describing specific embodiments, and are not intended to limit the embodiments of the present disclosure. The singular expressions "a/an", "a kind of", "the", "above", "aforementioned", "this", etc. in embodiments of the present disclosure also include plural expressions, unless there is a clear contrary indication in the context. It should also be understood that the term "and/or" used in this article refers to and includes any or all possible combinations of one or more associated listed items. In embodiments of the present disclosure, "multiple" refers to two or more. The prefixes such as "first" and "second" in embodiments of the present disclosure are only used to distinguish different descriptive objects, and do not constitute restrictions on the position, order, priority, quantity or content of the descriptive objects. The description of the descriptive objects is described in the context of the claims or embodiments, and should not constitute redundant restrictions due to the use of prefix numerals. For example, "first", "second", "third", etc. are used to describe various information, but these information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "at the time of" or "when" or "in response to determining". In some embodiments, the names of information and the like are not limited to the names described in embodiments, and the terms "information", "message", "signaling", "report", "instruction", "configuration", "data" and the like may be interchangeable.

In some embodiments of the present disclosure, "obtain", "acquire", "get", "receive", and "transmit (send and/or receive)" are interchangeable, which may be interpreted as receiving from other entities, obtaining from a protocol, obtaining by self-processing, and other meanings.

In some embodiments of the present disclosure, "send", "report", "issue", and "transmit (send and/or receive)" may be replaced with each other.

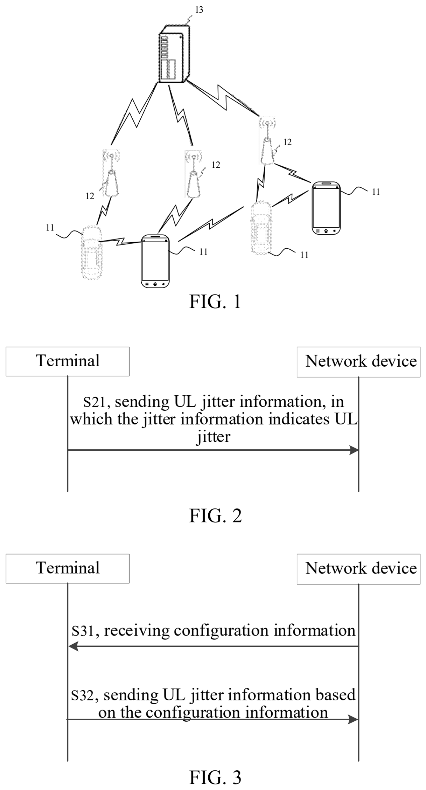

With reference to FIG. 1, FIG. 1 is a schematic diagram of a communication system according to an embodiment of the present disclosure. As shown in FIG. 1, the wireless communication system is a communication system based on the cellular mobile communication technology, and the wireless communication system may include several UEs 11, and several access network elements 12.

The UE 11 may be a device that provides voice and/or data connectivity to users. The UE 11 may communicate with one or more core networks via a radio access network (RAN). The UE 11 may be an Internet of Things (IoT) UE, such as a sensor device, a mobile phone (or a "cellular" phone), and a computer with an IoT UE. For example, it may be a fixed, portable, pocket-sized, handheld, computer-built-in or vehicle-mounted device. For example, it may be a station (STA), a subscriber unit, a subscriber station, a mobile station, a mobile, a remote station, an access point, a remote UE (remote terminal), an access UE (access terminal), a user terminal, a user agent, a user device, or a user (user equipment, UE). Alternatively, the UE 11 may also be a device of an unmanned aerial vehicle (UAV). Alternatively, the UE 11 may also be a vehicle-mounted device, for example, it may be a driving computer with a wireless communication function, or a wireless communication device externally connected to the driving computer. Alternatively, the UE 11 may also be a roadside device, for example, a street lamp, a signal lamp or other roadside devices with a wireless communication function.

The access network element 12 may be a network side device in the wireless communication system. The wireless communication system may be a fourth-generation mobile communication (4G) system, also known as a long-term evolution (LTE) system; or, the wireless communication system may be a 5G system, also known as a new radio (NR) system or a 5G NR system. Alternatively, the wireless communication system may be a next generation system of the 5G system. The access network in the 5G system may be referred to as new generation-radio access network (NG-RAN). Alternatively, the wireless communication system may be a machine type communication (MTC) system.

The access network element 12 may be an evolved access device (eNB) adopted in the 4G system. Alternatively, the access network element 12 may also be an access device (gNB) adopting a centralized distributed architecture in the 5G system. When the access network element 12 adopts the centralized distributed architecture, it usually includes a central unit (CU) and at least two distributed units (DUs). The central unit is provided with a protocol stack including a packet data convergence protocol (PDCP) layer, a radio link layer control protocol (RLC) layer, and a media access control (MAC) layer; the distributed unit is provided with a protocol stack including a physical (PHY) layer. The specific implementation of the access network element 12 is not limited in embodiments of the present disclosure.

A wireless connection may be established between the access network element 12 and the UE 11 through a wireless air interface. In different implementations, the wireless air interface is a wireless air interface based on a fourth generation mobile communication network technology (4G) standard; or, the wireless air interface is a wireless air interface based on a fifth generation mobile communication network technology (5G) standard, for example, the wireless air interface is a new radio interface; or, the wireless air interface may also be a wireless air interface based on a next generation mobile communication network technology standard of the 5G standard.

In some embodiments, the wireless communication system may further include a core network element 13.

The several access network elements 12 are connected to the core network element 13, respectively. For example, the core network element 13 may be a core network device in the wireless communication system, such as a mobility management entity (MME) in an evolved packet core (EPC) network. Alternatively, the core network element may also be other core network devices, such as a serving gateway (SGW), a public data network gateway (PGW), a policy and charging rules function unit (PCRF), or a home subscriber server (HSS); or the core network element 13 may also be a core network device in 5G, such as a policy control function (PCF), or a session management function (SMF), an access and mobility management function (AMF), a unified data management (UDM), or a user plane function (UPF). The embodiments of the present disclosure do not limit the implementation of the core network element 13.

In some embodiments, an XR device is connected to a terminal through a predetermined communication connection mode (i.e., the XR device is in a tethering scenario), and the predetermined connection mode may be a non-direct link, which may cause uplink (UL) jitter. The UL jitter will be reported to a network device for parameter configuration, such as for configuring a starting position of an unlicensed resource, in order to better match the uplink service.

The embodiments of the present disclosure provide an information processing method, performed by a terminal, including sending UL jitter information.

Alternatively, the UL jitter information is information indicating UL jitter. Alternatively, the UL jitter information may be information obtained by the terminal in performing UL jitter measurement or information related to UL jitter measurement.

Alternatively, the name of the UL jitter information may not be limited. For example, the UL jitter information may be first information, and the first information only needs to be information about UL jitter; for another example, the UL jitter information may be a result of UL jitter measurement.

As shown in FIG. 2, an embodiment of the present disclosure provides an information processing method, performed by a terminal. The method includes the following steps.

Step S21, UL jitter information is sent to a network device, in which the jitter information indicates UL jitter.

Alternatively, the terminal may be, but is not limited to, the UE described in the above embodiments. Alternatively, the terminal may be at least one of the following: a mobile phone, a computer, a server, a wearable device, a game control platform, a roadside device, a vehicle-mounted device, or a multimedia device. Alternatively, the terminal may be at least one of the following: a reduced capability UE, a 5G energy-saving (NR-lite) terminal, a Redcap terminal, and an eRedcap terminal.

Alternatively, the network device may be other functions or nodes flexibly deployed in the access network. Alternatively, the network device may be various types of base stations. For example, the base station may be at least one of the following: a 2G base station, a 3G base station, a 4G base station, a 5G base station, and other evolved base stations.

In some embodiments, before step S21, the method further includes: obtaining the UL jitter information. For example, the terminal measures the UL jitter to obtain the UL jitter information.

In some embodiments, the UL jitter is related to a specific service. Alternatively, the terminal sends the UL jitter information to the network device; the UL jitter information indicates UL jitter of the specific service, or the UL jitter information is information of the UL jitter of the specific service.

Alternatively, the specific service may be an XR service. For example, the XR service includes Virtual Reality (VR), Augmented Reality (AR) and Mixed Reality (MR).

Alternatively, the specific service may also be any service in which a terminal communicates with at least one connected device through a predetermined communication connection mode. The predetermined communication connection mode may be any connection mode of a non-direct link connection, or the predetermined communication connection mode may be a connection mode such as Wi-Fi or Bluetooth. The device may be any device, for example, a smart watch, smart glasses, or an XR device.

Since the specific service involves at least one data stream, if the at least one data stream cannot reach a receiving end at a reference time, or when the specific service data stream involves multiple data streams and the multiple data streams cannot reach the receiving end at the same time, UL jitter will occur.

Accordingly, in embodiments of the present disclosure, the UL jitter information is sent by the terminal to the network device, so that the network device may be aware of a UL jitter situation, and it is beneficial for the network device to perform resource scheduling and/or QoS parameter configuration based on the UL jitter, thereby relieving the problem of poor communication quality caused by UL jitter and improving communication quality.

In some embodiments, the UL jitter information includes at least one of the following:
a measurement value of the UL jitter;
a measurement value range of the UL jitter;
a period of a QoS flow for UL jitter measurement; or
a first indication value, indicating whether a measurement value exceeds a predetermined threshold; or
a second indication value, indicating a time relationship between a receiving time caused by the UL jitter and a reference time.

Alternatively, the second indication value may also indicate a time relationship (i.e., an early-late relationship) between a sending time caused by UL jitter and the reference time.

If the second indication value indicates the early or late relationship between the receiving time and the reference time, the receiving time refers to the time when the terminal receives a data stream of a predetermined service, and the reference time refers to the predefined time when the data stream of the predetermined service needs to be received. Alternatively, if the second indication value indicates the early or late relationship between the sending time and the reference time, the sending time refers to the time when the terminal sends the data stream of the predetermined service, and the reference time refers to the predefined time when the data stream of the predetermined service needs to be sent.

In some embodiments, the UL jitter information includes a parameter value; the parameter value includes at least one of the following: a measurement value, a measurement value range, a period of a QoS flow, a first indication value, or a second indication value.

Alternatively, each of the measurement value, the measurement value range, the period of the QoS flow, the first indication value and the second indication value may be indicated by at least one bit.

Alternatively, the measurement value may be a positive value or a negative value. For example, if the receiving time of the data stream is earlier than the reference time, the measurement value of the UL jitter is a positive value, or, if the receiving time of the data stream is later than the reference time, the measurement value of the UL jitter is a negative value. For another example, if the receiving time of the data stream is later than the reference time, the measurement value of the UL jitter is a positive value, or, if the receiving time of the data stream is earlier than the reference time, the measurement value of the UL jitter is a negative value.

Alternatively, the measurement value range may also be a positive value or a negative value. For example, the measurement value range may be [-X, -Y], [-X, Y], or [Y, X], where X and Y are positive numbers, and X is greater than Y.

Alternatively, the QoS flow may be the data stream in the above embodiments, and the QoS flow includes at least one data packet and/or at least one data packet set. One data packet set includes at least one data packet. The period of the QoS flow may refer to the period of receiving or sending the QoS flow; for example, it may be at a time of t, 2×t, 3×t, ..., n×t, where n is an integer greater than 1 and t is a time unit.

Alternatively, the first indication value is a first value, such as "0" or "00", etc., which is used to indicate that the measurement value exceeds the predetermined threshold; or, the first indication value is a second value, such as "1" or "11", etc., which is used to indicate that the measurement value does not exceed the predetermined threshold.

Alternatively, the predetermined threshold is configured by the network device, or the predetermined threshold is based on a protocol stipulation. For example, the protocol stipulation is: a communication protocol stipulation, or a stipulation negotiated between the terminal and the network device.

Alternatively, when the second indication value is a first value, such as "0" or "00", it is used to indicate a first early-late relationship; or when the second indication value is a second value, such as "1" or "11", it is used to indicate a second early-late relationship. For example, the first early-late relationship may refer to that the receiving time is earlier than the reference time, or the sending time is earlier than the reference time; the second early-late relationship may refer to that the receiving time is later than the reference time, or the sending time is later than the reference time.

In an embodiment of the present disclosure, the terminal may send the UL jitter information including at least one of a UL jitter measurement value, a UL jitter measurement value range, a period of a QoS flow for UL jitter measurement, the first indication value or the second indication value to the network device, so that the network device can accurately know a specific situation of the UL jitter, thereby facilitating more reasonable scheduling of resources of the network device and/or more accurate configuration of QoS parameters.

In an embodiment, sending the UL jitter information includes sending first assistance information, in which the first assistance information includes the UL jitter information.

An embodiment of the present disclosure provides an information processing method, performed by a terminal, including: sending first assistance information, in which the first assistance information includes the UL jitter information.

Alternatively, the first assistance information may be uplink assistance information (UAI) or UE assistance information (UAI).

Alternatively, the first assistance information may include a measurement report, or the UL jitter information may include a measurement report.

In embodiments of the present disclosure, the terminal may send the UL jitter information through the first assistance information and may multiplex the first assistance information, thereby saving signaling overhead.

It should be noted that those skilled in the art can understand that the method provided in embodiments of the present disclosure may be executed alone or together with some methods in embodiments of the present disclosure or some methods in related technologies.

In some embodiments of the present disclosure, the terminal may actively send the UL jitter information. Alternatively, the terminal actively acquires the UL jitter information.

In some other embodiments of the present disclosure, the terminal may send the UL jitter information based on configuration information configured by the network device. Alternatively, the terminal obtains the UL jitter information according to the configuration information. For example, after receiving the configuration information of the network device, the terminal measures the UL jitter to obtain the UL jitter information, and sends the UL jitter information to the network device.

An embodiment of the present disclosure provides an information processing method, performed by a terminal, including: receiving configuration information.

Alternatively, the configuration information is used for the terminal to send the UL jitter information.

Alternatively, the configuration information is used to instruct the terminal to send the UL jitter information.

Alternatively, the configuration information is used for the terminal to perform UL jitter measurement.

In some embodiments, the method further includes: receiving the configuration information sent by the network device; and sending the UL jitter information includes: sending the UL jitter information to the network device based on the configuration information.

As shown in FIG. 3, an embodiment of the present disclosure provides an information processing method, performed by a terminal. The method includes the following steps.

Step S31, configuration information sent by a network device is received.

Step S32, UL jitter information is sent to the network device based on the configuration information.

In some embodiments of the present disclosure, the UL jitter information may be the UL jitter information in the above embodiments.

In this way, the terminal may send the UL jitter information after receiving the configuration information, so as to accurately report the UL jitter information based on a reporting requirement of the network device.

In some embodiments, receiving the configuration information sent by the network device includes: receiving a Radio Resource Control (RRC) message sent by the network device, in which the RRC message includes the configuration information for notifying a terminal to report the measured uplink jitter through UAI.

In some embodiments, receiving the configuration information sent by the network device includes: receiving an RRC message sent by the network device, in which the RRC message notifies the terminal of a measurement configuration for uplink jitter.

An embodiment of the present disclosure provides an information processing method, performed by a terminal, and including: receiving an RRC message sent by the network device, in which the RRC message includes the configuration information.

Alternatively, the network device sends the configuration information via a system message or downlink control information (DCI), etc. For example, the network device sends a system message, and the system message includes the configuration information. For another example, the network device sends a DCI, and the DCI includes the configuration information.

In embodiments of the present disclosure, the configuration information may be sent via an RRC message, a system message, or a DCI, so that the RRC message, the system information, or the DCI may be multiplexed to reduce signaling overhead.

It should be noted that those skilled in the art can understand that the method provided in embodiments of the present disclosure may be executed alone or together with some methods in embodiments of the present disclosure or some methods in related technologies.

In some embodiments, the configuration information further indicates a granularity at which the terminal sends the UL jitter information; the granularity includes at least one of the following: a granularity per terminal, a granularity per QoS flow, or a granularity per data radio bearer (DRB). Alternatively, the configuration information is used for the terminal to send the UL jitter information of the terminal, and/or, the configuration information is used for the terminal to send the UL jitter information of the QoS flow, and/or, the configuration information is used for the terminal to send the UL jitter information corresponding to the DRB.

In some embodiments, sending the UL jitter information includes at least one of: sending UL jitter information of the terminal; sending UL jitter information of a target QoS flow; sending UL jitter information corresponding to a target DRB; or sending UL jitter information of at least one target QoS flow associated with a target DRB.

Alternatively, the configuration information is further used to indicate that the granularity at which the terminal sends the UL jitter information is the granularity per measurement report. For example, the terminal receives the configuration information of the network device, and sends the UL jitter information of the measurement report of each QoS flow according to the configuration information.

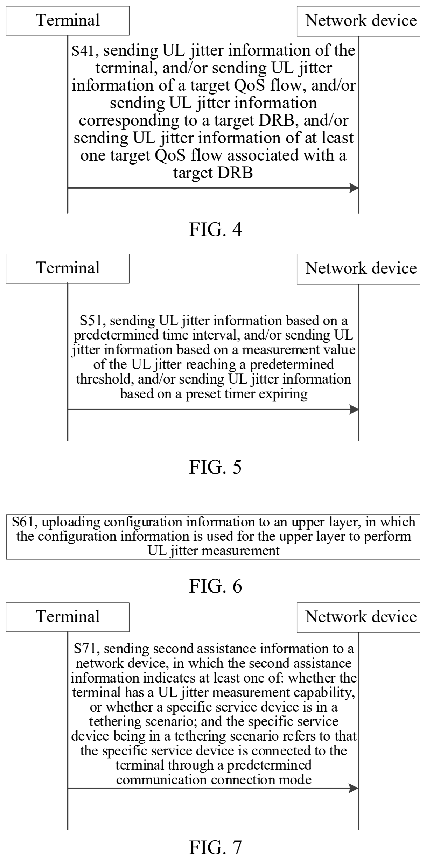

As shown in FIG. 4, an embodiment of the present disclosure provides an information processing method, performed by a terminal. The method includes the following steps.

Step S41, ULjitter information of the terminal is sent, and/or UL jitter information of a target QoS flow is sent, and/or UL jitter information corresponding to a target DRB is sent, and/or UL jitter information of at least one target QoS flow associated with a target DRB is sent.

In some embodiments of the present disclosure, the UL jitter information may be the UL jitter information in the above embodiments.

Alternatively, one terminal corresponds to one or more DRBs, and/or one terminal corresponds to one or more QoS flows.

Alternatively, one DRB is associated with one or more QoS flows, the QoS flow associated with the DRB may refer to a QoS flow mapped to the DRB.

Alternatively, the QoS flow includes a target QoS flow. Not all QoS flows have UL jitter, and the terminal may only report UL jitter information of at least one QoS flow having the UL jitter. For example, the terminal determines that the terminal corresponds to multiple QoS flows, and determines that at least one QoS flow having the UL jitter among the multiple QoS flows is the target QoS flow.

Alternatively, one terminal corresponds to one or more target QoS flows.

Alternatively, the DRB includes a target DRB. Not all DRBs have UL jitter, and the terminal may only report UL jitter information corresponding to at least one target DRB having the UL jitter. For example, the terminal determines that the terminal corresponds to multiple DRBs, and determines that at least one DRB having the UL jitter among the multiple DRBs is the target DRB.

Alternatively, one terminal corresponds to one or more target DRBs, and one target DRB may correspond to one or more target QoS flows.

Alternatively, the UL jitter information includes a measurement value of the UL jitter. For example, when there are multiple target QoS flows, the measurement value includes at least one of the following: a maximum measurement value of the multiple target QoS flows, a minimum measurement value of the multiple target QoS flows, and an average measurement value of the multiple target QoS flows.

For example, the terminal sends UL jitter information of multiple target QoS flows. Method 1: the terminal sends UL jitter information, and the UL jitter information includes measurement values corresponding respectively to the multiple target QoS flows, that is, a list of measurement results for the multiple QoS flows is reported. Method 2: the terminal determines the maximum measurement value of the UL jitter corresponding to the multiple target QoS flows, and the terminal sends UL jitter information including the maximum measurement value. Method 3: the terminal determines the minimum measurement value of the UL jitter corresponding to the multiple target QoS flows, and the terminal sends UL jitter information including the minimum measurement value. Method 4: the terminal determines the average measurement value of the UL jitter corresponding to the multiple target QoS flows, and the terminal sends UL jitter information including the average measurement value.

In embodiments of the present disclosure, the granularity at which the terminal reports the UL jitter information may be targeted for a single terminal, or for a single QoS flow, or for a single DRB. In addition, the terminal may actively report the UL jitter information in different granularities, or may report the UL jitter information in different granularities indicated by the configuration information configured by the network device.

It should be noted that those skilled in the art can understand that the method provided in embodiments of the present disclosure may be executed alone or together with some methods in embodiments of the present disclosure or some methods in related technologies.

In some embodiments, the configuration information further includes at least one of the following: a period of a QoS flow for UL jitter measurement, reporting mode information indicating a reporting mode of the UL jitter information, or a parameter value of the UL jitter information.

For example, the terminal receives the configuration information sent by the network device, in which the configuration information indicates the parameter value of the UL jitter information. The terminal measures the UL jitter to obtain the UL jitter information, and sends the parameter value of the UL jitter information to the network device.

For example, the terminal receives the configuration information sent by the network device, in which the configuration information indicates the reporting mode information indicating the reporting mode of the UL jitter information. The terminal measures the UL jitter to obtain the UL jitter information, and reports the UL jitter information to the network device based on the reporting mode indicated by the reporting mode information.

Alternatively, the reporting mode information includes one of:
periodic reporting information, indicating that the reporting mode of the UL jitter information is periodic reporting and/or a time interval of periodic reporting is a predetermined time interval; or
event reporting information, indicating that the reporting mode of the UL jitter information is event-triggered reporting and/or a triggering condition of event-triggered reporting.

As an embodiment, the trigger condition is that, the measurement value of the UL jitter reaches a predetermined threshold or the measurement value of the UL jitter changes compared with the last reported value (or measurement value), or a change of the measurement value of the UL jitter compared with the last reported value (or measurement value) reaches a predetermined threshold. Alternatively, the reported value is the measurement value, or a difference between the reported value and the measurement value is within a predetermined range.

As an embodiment, the trigger condition is that a preset timer expires.

A combination of the above two conditions is possible, i.e., the measurement value of the UL jitter may be reported if the measurement value reaches a predetermined threshold and the preset timer expires.

Alternatively, a triggering event may also be that a time interval between two reports is greater than a predetermined time interval.

Alternatively, the predetermined threshold may be configured by the network device or specified by a protocol.

Alternatively, the parameter value includes at least one of: a measurement value of the UL jitter; a measurement value range of the UL jitter; a period of a QoS flow for UL jitter measurement; a first indication value, indicating whether a measurement value exceeds a predetermined threshold; or a second indication value, indicating a time relationship between a receiving time caused by the UL jitter and a reference time.

In embodiments of the present disclosure, the period of the QoS flow of the UL jitter information is configured for the terminal by the network device, which facilitates the terminal to perform the UL jitter measurement. For example, the period of the QoS flow may be used to facilitate determining the UL jitter measurement value, the measurement value range, and the second indication value. Alternatively, the period of the QoS flow may be used to determine the reference time.

Furthermore, in embodiments of the present disclosure, the reporting mode is configured for the terminal by the network device, so that the terminal can report the UL jitter information based on the reporting mode, thereby meeting the reporting requirement of the network device.

**In** some embodiments, the configuration information may include measurement mode information, in which the measurement mode information is used to indicate a measurement mode of the UL jitter.

Alternatively, the measurement mode information includes at least one of:
periodic measurement information, indicating that the measurement mode of the UL jitter is periodic measurement and/or a time interval of periodic measurement is a predetermined time interval; or
event measurement information, indicating that the measurement mode of the UL jitter is event-triggered measurement and/or a triggering condition of event-triggered measurement, in which the trigger condition includes: a measurement value of the UL jitter reaching a predetermined threshold, or a preset timer expiring.

**In** some embodiments, sending the UL jitter information includes at least one of the following: sending the UL jitter information based on a predetermined time interval; sending the UL jitter information based on a measurement value of the UL jitter reaching a predetermined threshold; or sending the UL jitter information based on a preset timer expiring.

**As** shown in FIG. 5, an embodiment of the present disclosure provides an information processing method, performed by a terminal. The method includes the following steps.

Step S51, UL jitter information is sent based on a predetermined time interval, and/or UL jitter information is sent based on a measurement value of the UL jitter reaching a predetermined threshold, and/or UL jitter information is sent based on a preset timer expiring.

Alternatively, the terminal sends the UL jitter information at the predetermined time interval according to configuration information.

Alternatively, the terminal determines, according to the configuration information, that the measurement value of the UL jitter reaches the predetermined threshold, and sends the UL jitter information.

Alternatively, the terminal determines, according to the configuration information, that the preset timer expires, and sends the UL jitter information. Alternatively, the timer expiring may refer to that a timing of the timer is reached after the timer is started or restarted.

Alternatively, the terminal determines that the timing of the timer is less than or equal to a first time interval, or the terminal determines that the predetermined time interval of the periodic reporting is less than or equal to the first time interval. In this way, the interval between two reports may be relatively small, thereby reducing frequent reporting by the terminal.

**In** embodiments of the present disclosure, the terminal may report the UL jitter information according to the reporting mode configured by the network device, thereby meeting the requirement of the network device.

Alternatively, in embodiments of the present disclosure, the terminal may also actively report the UL jitter information in a certain reporting mode, so that the reporting may be performed in consideration of an actual situation of the terminal.

In addition, the UL jitter information may be reported in a variety of reporting modes, so as to adapt to more application scenarios. In addition, through periodic reporting, a UL jitter situation of a predetermined service may be more comprehensively understood; or through event-triggered reporting, the frequent reporting of the terminal may be reduced, thereby saving power consumption of the terminal and the network device.

It should be noted that those skilled in the art can understand that the method provided in embodiments of the present disclosure may be executed alone or together with some methods in embodiments of the present disclosure or some methods in related technologies.

**As** shown in FIG. 6, an embodiment of the present disclosure provides an information processing method, performed by a terminal. The method includes the following steps.

Step S61, configuration information is uploaded to an upper layer, in which the configuration information is used for the upper layer to perform UL jitter measurement.

**In** some embodiments of the present disclosure, the configuration information may be the configuration information in the above embodiments.

Alternatively, the upper layer may be a non-access stratum (NAS) or an RRC layer.

For example, the terminal submits a parameter value and/or reporting mode information included in the configuration information to the NAS, and the NAS uses the configuration information to perform UL jitter measurement to obtain UL jitter information.

In embodiments of the present disclosure, the terminal may perform UL jitter measurement through the upper layer, etc., which provides a basis for reporting the UL jitter information.

It should be noted that those skilled in the art can understand that the method provided in embodiments of the present disclosure may be executed alone or together with some methods in embodiments of the present disclosure or some methods in related technologies.

**As** shown in FIG. 7, an embodiment of the present disclosure provides an information processing method, performed by a terminal. The method includes the following steps.

Step S71, second assistance information is sent to a network device, in which the second assistance information indicates at least one of: whether the terminal has a UL jitter measurement capability, or whether a specific service device is in a tethering scenario; and the specific service device being in a tethering scenario refers to that the specific service device is connected to the terminal through a predetermined communication connection mode.

### Alternatively, step S71 precedes step S31

Alternatively, the predetermined connection mode may be the predetermined communication connection mode in the above embodiments; for example, the predetermined communication connection mode may be any connection mode of a non-direct link connection, or the predetermined communication connection mode may be a connection mode such as Wi-Fi or Bluetooth.

Alternatively, the specific service device may be an XR device. Or, the specific service device may be any device.

Alternatively, the second assistance information may include at least one of:
first indication information, indicating whether the terminal has a UL jitter measurement capability, or
second indication information, indicating whether the specific service device is in a tethering scenario.

Alternatively, the first indication information may be indicated by at least one bit. The first indication information is a first value, such as "0" or "00", etc., which is used to indicate that the terminal has the UL jitter measurement capability; or, the first indication information is a second value, such as "1" or "11", etc., which is used to indicate that the terminal does not have the UL jitter measurement capability.

Alternatively, the second indication information may be indicated by at least one bit. When the second indication information is a first value, such as "0" or "00", it is used to indicate that the specific service device is in a tethering scenario; or when the second indication information is a second value, such as "1" or "11", it is used to indicate that the specific service device is not in a tethering scenario.

In some embodiments, the second assistance information is used for the network device to determine whether to send configuration information.

Alternatively, the second assistance information indicates that the terminal has the UL jitter measurement capability, and the network device sends the configuration information; or, the second assistance information indicates that the terminal does not have the UL jitter measurement capability, and the network device does not send the configuration information.

Alternatively, the second assistance information indicates that the specific service device is in the tethering scenario, and the network device sends the configuration information; or, the second assistance information indicates that the specific service device is not in the tethering scenario, and the network device does not send the configuration information.

In the disclosed embodiment, the terminal may report to the network device whether the terminal has the UL jitter measurement capability and/or whether the specific service device is in the tethering scenario, so that the network device may determine whether to configure the terminal with a configuration of UL jitter information. In this way, on one hand, when the terminal is capable of performing UL jitter measurement or has the UL jitter, the terminal reports the UL jitter information after performing UL jitter measurement based on the configuration requirement of the network device; while on the other hand, when the terminal is incapable of performing UL jitter measurement or does not have the UL jitter, the network device does not need to send the configuration information to save power consumption of the network device and the terminal.

It should be noted that those skilled in the art can understand that the method provided in embodiments of the present disclosure may be executed alone or together with some methods in embodiments of the present disclosure or some methods in related technologies.

The following provides an information processing method performed by a network device, which is similar to the description of the information processing method performed by the terminal mentioned above. For technical details not disclosed in the following embodiment of the information processing method performed by the network device, reference may be made to the description of the above-mentioned embodiment of the information processing method performed by the terminal, which is not repeated here.

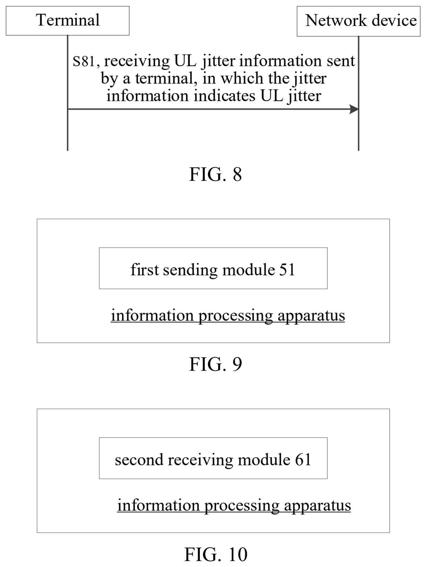

As shown in FIG. 8, an embodiment of the present disclosure provides an information processing method, performed by a network device. The method includes the following steps.

Step S81, UL jitter information sent by a terminal is received, in which the jitter information indicates UL jitter.

In some embodiments of the present disclosure, the terminal and the network device may be the terminal and the network device in the above embodiments respectively; the UL jitter information may be the UL jitter information in the above embodiments; and the first assistance information may be the first assistance information in the above embodiments.

Alternatively, the UL jitter information is obtained by the terminal in performing UL jitter measurement.

Alternatively, the UL jitter information may be information indicating UL jitter.

Alternatively, the UL jitter information indicates UL jitter of a specific service. Alternatively, the specific service may be an XR service.

In some embodiments, the UL jitter information includes at least one of the following:
a measurement value of the UL jitter;
a measurement value range of the UL jitter;
a period of a QoS flow for UL jitter measurement; or
a first indication value, indicating whether a measurement value exceeds a predetermined threshold; or
a second indication value, indicating a time relationship between a receiving time caused by the UL jitter and a reference time.

In some embodiments, receiving the UL jitter information sent by the terminal includes receiving first assistance information sent by the terminal, in which the first assistance information includes the UL jitter information.

An embodiment of the present disclosure provides an information processing method, performed by a network device, including: receiving first assistance information by the terminal, in which the first assistance information includes the UL jitter information.

An embodiment of the present disclosure provides an information processing method, performed by a network device, including: sending configuration information to the terminal, in which the configuration information is used for the terminal to send the UL jitter information. Alternatively, the configuration information is used for the terminal to perform UL jitter measurement.

Alternatively, the UL jitter information is sent by the terminal based on the configuration information.

Alternatively, the UL jitter information is sent by the terminal actively.

In some embodiments, sending the configuration information includes: sending a Radio Resource Control (RRC) message to the terminal, in which the RRC message includes the configuration information.

An embodiment of the present disclosure provides an information processing method, performed by a network device, including: sending an RRC message to the terminal, in which the RRC message includes the configuration information.

**In** some embodiments of the present disclosure, the configuration information may be the configuration information in the above embodiments; the reporting mode information and the parameter value may be the reporting mode information and the parameter value in the above embodiments, respectively.

In some embodiments, the configuration information further indicates a granularity at which the terminal sends the UL jitter information; the granularity includes at least one of the following: a granularity per terminal, a granularity per QoS flow, or a granularity per data radio bearer (DRB).

In some embodiments, the configuration information further includes at least one of the following: a period of a QoS flow for UL jitter measurement, reporting mode information indicating a reporting mode of the UL jitter information, or a parameter value of the UL jitter information.

Alternatively, the reporting mode information includes at least one of:
periodic reporting information, indicating that the reporting mode of the UL jitter information is periodic reporting and/or a time interval of periodic reporting is a predetermined time interval; or
event reporting information, indicating that the reporting mode of the UL jitter information is event-triggered reporting and/or a triggering condition of event-triggered reporting.

Alternatively, the trigger condition is that, the measurement value of the UL jitter reaches a predetermined threshold or the measurement value of the UL jitter changes compared with the last reported value (or measurement value), or a change of the measurement value of the UL jitter compared with the last reported value (or measurement value) reaches a predetermined threshold. Alternatively, the reported value is the measurement value, or a difference between the reported value and the measurement value is within a predetermined range.

Alternatively, the trigger condition is that a preset timer expires.

**A** combination of the above two conditions is possible, i.e., the measurement value of the UL jitter may be reported if the measurement value reaches a predetermined threshold and the preset timer expires.

Alternatively, a parameter value includes at least one of: a measurement value of the UL jitter; a measurement value range of the UL jitter; a period of a QoS flow for UL jitter measurement; a first indication value; or a second indication value.

Alternatively, the UL jitter information includes the parameter value.

Alternatively, when there are multiple target QoS flows, the measurement value includes at least one of the following: a maximum measurement value of the multiple target QoS flows, a minimum measurement value of the multiple target QoS flows, and an average measurement value of the multiple target QoS flows.

An embodiment of the present disclosure provides an information processing method, performed by a network device, including: receiving second assistance information sent by the terminal, in which the second assistance information indicates at least one of:
whether the terminal has a UL jitter measurement capability, or
whether a specific service device is in a tethering scenario; and the specific service device being in a tethering scenario refers to that the specific service device is connected to the terminal through a predetermined communication connection mode.

In some embodiments, before sending the configuration information, the method further includes receiving the second assistance information.

In some embodiments of the present disclosure, the second assistance information may be the second assistance information in the above embodiments.

Regarding the implementations, reference may be made to the description at the terminal side, which is not repeated here.

**It** should be noted that those skilled in the art can understand that the method provided in embodiments of the present disclosure may be executed alone or together with some methods in embodiments of the present disclosure or some methods in related technologies.

In order to further explain any embodiment of the present disclosure, a specific embodiment is provided below.

### Example 1

An embodiment of the present disclosure involves an information processing method, the method includes the following steps.

In some embodiments, the terminal reports uplink jitter (UL jitter) assistance information to the base station. Alternatively, the UL jitter assistance information is the first assistance information in the above embodiments.

Alternatively, the UL jitter is related to a specific service.

Alternatively, the specific service is an XR service.

Alternatively, the granularity at which the UL jitter is reported may be per QoS flow, or per DRB, or per QoS flow UL jitter measurement report.

In some embodiments, the network device configures the terminal to measure UL jitter through an RRC message; the configuration granularity may refer to being configured for a single terminal.

Alternatively, the network device instructs the terminal to measure target QoS flows with UL jitter (not all QoS flows have the UL jitter). The terminal may report a list of measurement results for the target QoS flows.

In some embodiments, the network device configures the terminal to measure UL jitter through an RRC message; the configuration granularity may refer to being configured for a DRB of a single terminal.

Alternatively, the network device instructs the terminal to measure the DRB of UL jitter; in this case, the terminal regards the uplink QoS flow mapped to the DRB as the target QoS flow to be measured.

Alternatively, the terminal reports a list of measurement results of target QoS flows for at least one target QoS flow mapped to the DRB.

Alternatively, the terminal reports a measurement result of the target QoS flow for at least one target QoS flow mapped to the DRB (the measurement results of the target QoS flow are integrated, such as taking an average value, a minimum value, or a maximum value, etc.).

In some embodiments, the network device configures the terminal to measure UL jitter through RRC messages; the configuration granularity may refer to being configured for each QoS flow of a single terminal.

Alternatively, the network device instructs the terminal to measure target QoS flows with UL jitter (not all QoS flows have the UL jitter).

Alternatively, the terminal reports information about a measurement result for the target QoS flow.

In some embodiments, for the measured target QoS flow, the network device configures a period corresponding to the QoS flow through an RRC message to facilitate the terminal to perform measurement (for example, for a certain QoS flow, the terminal may measure at the period corresponding to the QoS flow). Alternatively, the period corresponding to the QoS flow may be the period of the QoS.

In some embodiments, the network device configures the terminal to measure UL jitter through an RRC message; the measurement reporting mode includes one of the following: periodic reporting and event-triggered reporting.

Alternatively, the network device configures a measurement time interval for the terminal to perform periodic measurement (for example, the network device configures a reporting time interval).

Alternatively, the network device configures the terminal to perform event-triggered reporting (for example, if a measurement value measured by the network device exceeds a predetermined threshold, then it is reported).

Alternatively, in order to reduce frequent reporting by the terminal, the network device may set a timer; the terminal limits the minimum time interval between two reports.

In some embodiments, the network device configures the terminal to measure UL jitter through an RRC message, and the reported quantity is at least one of the following:

a positive or negative value of the UL jitter, in which the positive or negative value corresponds to later than or earlier than the reference time point, respectively;
a specific range of the UL jitter;
an indication of whether the UL jitter exceeds a predetermined threshold, indicating whether the UL jitter exceeds the predetermined threshold or does not exceed the predetermined threshold; or
a period of a QoS flow corresponding to the UL jitter.

Alternatively, the reported quantity may be the reference value in the above embodiments; the positive value or negative value may be the measurement value in the above embodiments; and the specific range of UL jitter may be the measurement value range of UL jitter in the above embodiments.

Alternatively, a positive value, a negative value or a specific value range of the UL jitter may be quantized and reported; the quantized reporting may be as shown in Table 1.

**Table 1**

| Reported value | Measurement value | Unit |
|---|---|---|
| Codepoint 0 | 0<UL jitter≤0.5 | ms |
| Codepoint 1 | 0.5<UL jitter≤1.5 | ms |
| Codepoint 2 | 1.5<UL jitter≤2.5 | ms |

It is understood that each element in the above Table 1 exists independently. These elements are exemplarily listed in the same table, but it does not mean that all elements in the table must exist at the same time as shown in the table. The value of each element is independent of the value of any other element in Table 1. Therefore, those skilled in the art can understand that the value of each element in Table 1 is an independent embodiment.

In some embodiments, the terminal receives a measurement request, submits a measurement parameter to the upper layer and notifies the upper layer to measure the UL jitter. Alternatively, the measurement request may be the configuration information in the above embodiments; the measurement parameter may be the UL jitter information in the above embodiments.

In some embodiments, the network device configures UL jitter measurement for the terminal based on assistance information reported by the terminal; the assistance information includes at least one of the following: the terminal reporting that the terminal has a UL jitter measurement capability, or the terminal reporting whether the XR device is in a tethering scenario (for example, the XR device is connected to the terminal via Wi-Fi or Bluetooth, etc.). Alternatively, the assistance information may be the second assistance information of the terminal in the above embodiments.

In some embodiments, the network device performs UL jitter configuration. If this field exists, the UE shall perform the actual UL jitter for each DRB or each Qos flow, and the UE shall ignore the fields "reportQuantityCell" and "maxReportCells". The applicable value of the corresponding reporting interval "reportInterval" is one of {120ms, 240ms, 480ms, 640ms, 1024ms, ms2048, 5120ms, 10240ms, 20480ms, 40960ms, 1min, 6min, 12min, 30min}. The reporting interval indicates the period for performing and reporting the UL jitter measured for each DRB or each Qos flow as specified.

In some embodiments, the terminal performs DRB level measurement and logical channel (LCH) level measurement simultaneously. If the UL jitter configuration is configured for the associated report configuration (reportConfig), the measurement object is ignored. For each configured DRB or QoS flow, the upper layer is configured to perform corresponding UL jitter measurement according to the configured threshold for each DRB or QoS flow.

For the above implementation, reference may be made to the description on the terminal side and/or the network device side for details, which will not be described in detail here.

It should be noted that those skilled in the art can understand that the method provided in the embodiments of the present disclosure may be executed alone or together with some methods in embodiments of the present disclosure or some methods in related technologies.

### Example 2

An embodiment of the present disclosure provides an information processing method, which is performed by a communication device, in which the communication device includes a UE and a network device. The information processing method includes: the network device sending configuration information to the UE, in which the configuration information is used for the UE to send UL jitter information; and the UE sending the UL jitter information to the network device.

In some embodiments, the UE sends second assistance information to the network device; the second assistance information is used to indicate at least one of the following: whether the UE has a UL jitter measurement capability, or whether a specific service device is in a tethering scenario; in which the specific service device being in a tethering scenario refers to that the specific service device is connected to the terminal through a predetermined communication connection method.

For the above implementation, reference may be made to the description on the terminal side and/or the network device side for details, which will not be described in detail here.

It should be noted that those skilled in the art can understand that the method provided in embodiments of the present disclosure may be executed alone or together with some methods in embodiments of the present disclosure or some methods in related technologies.

As shown in FIG. 9, an embodiment of the present disclosure provides an information processing apparatus including a first sending module 51.

The first sending module 51 is configured to send uplink (UL) jitter information to a network device, in which the UL jitter information indicates UL jitter.

The information processing apparatus provided by embodiments of the present disclosure may be a terminal.

An embodiment of the present disclosure provides an information processing apparatus including an obtaining module, configured to obtain the UL jitter information.

An embodiment of the present disclosure provides an information processing apparatus including the first sending module 51 configured to send first assistance information, in which the first assistance information includes the UL jitter information.

An embodiment of the present disclosure provides an information processing apparatus including:
a first receiving module, configured to receive configuration information sent by the network device;
in which the first sending module 51 is configured to send the UL jitter information based on the configuration information.

An embodiment of the present disclosure provides an information processing apparatus including an obtaining module, configured to obtain the UL jitter information based on the configuration information.

An embodiment of the present disclosure provides an information processing apparatus including: a first receiving module, configured to receive a radio resource control (RRC) message sent by the network device, in which the RRC message includes the configuration information.

In some embodiments, the configuration information further indicates a granularity at which the terminal sends the UL jitter information; the granularity includes at least one of: a granularity per terminal; a granularity per quality of service (QoS) flow; or a granularity per data radio bearer (DRB).

In some embodiments, the configuration information further includes at least one of: a period of a QoS flow for UL jitter measurement; a reporting mode information indicating a reporting mode of the UL jitter information; or a parameter value of the UL jitter information.

In some embodiments, the reporting mode information includes one of:
periodic reporting information, indicating that the reporting mode of the UL jitter information is periodic reporting and/or a time interval of periodic reporting is a predetermined time interval; or
event reporting information, indicating that the reporting mode of the UL jitter information is event-triggered reporting and/or a triggering condition of event-triggered reporting.

In some embodiments, the trigger condition is one of the followings: the measurement value of the UL jitter reaching a predetermined threshold, the measurement value of the UL jitter changing compared with the last reported value (or measurement value), a change of the measurement value of the UL jitter compared with the last reported value (or measurement value) reaching a predetermined threshold, or a preset timer expiring.

In some embodiments, the parameter value comprises at least one of:
a measurement value of the UL jitter;
a measurement value range of the UL jitter;
the period of the QoS flow for the UL jitter measurement; or
a first indication value, indicating whether a measurement value exceeds a predetermined threshold; or
a second indication value, indicating a time relationship between a receiving time caused by the UL jitter and a reference time.

An embodiment of the present disclosure provides an information processing apparatus including: a first sending module 51, configured to perform at least one of:
sending UL jitter information of the terminal;
sending UL jitter information of a target QoS flow;
sending UL jitter information of a target DRB; or
sending UL jitter information of at least one target QoS flow associate with a target DRB.

An embodiment of the present disclosure provides an information processing apparatus including: a first sending module 51, configured to send UL jitter information of at least one QoS flow of the terminal; and/or a first sending module 51, configured to send UL jitter information of at least one DRB of the terminal.

An embodiment of the present disclosure provides an information processing apparatus including: a first sending module 51, configured to perform at least one of:
sending the UL jitter information based on a predetermined time interval;
sending the UL jitter information based on a measurement value of the UL jitter reaching a predetermined threshold; or
sending the UL jitter information based on expiry of a preset timer.

In some embodiments, the UL jitter information includes a parameter value, in which the parameter value includes at least one of: a measurement value, a measurement value range, a period of a QoS flow, a first indication value, or a second indication value.

In some embodiments, in a case that there are a plurality of target QoS flows, the measurement value includes at least one of: a maximum measurement value of the plurality of target QoS flows; a minimum measurement value of the plurality of target QoS flows; or an average measurement value of the plurality of target QoS flows.

An embodiment of the present disclosure provides an information processing apparatus including: a first sending module 51, configured to upload the configuration information to an upper layer, in which the configuration information is used by the upper layer to perform UL jitter measurement.

An embodiment of the present disclosure provides an information processing apparatus including: a first sending module 51, configured to send second assistance information to the network device, in which the second assistance information indicates at least one of:
whether the terminal has a UL jitter measurement capability; or
whether a specific service device is in a tethering scenario; in which the specific service device being in the tethering scenario indicates that the specific service device is connected to the terminal through a predetermined communication connection mode.

**As** shown in FIG. 10, an embodiment of the present disclosure provides an information processing apparatus including a second receiving module 61.

The second receiving module 61 is configured to receive uplink (UL) jitter information by a terminal, in which the UL jitter information indicates UL jitter.

The information processing apparatus provided by embodiments of the present disclosure may be a network device.

An embodiment of the present disclosure provides an information processing apparatus including a second receiving module 61, configured to receive first assistance information sent by the terminal, in which the first assistance information includes the ULjitter information.

An embodiment of the present disclosure provides an information processing apparatus including: a second sending module, configured to send configuration information to the network device; in which the configuration information is used for the terminal to send the UL jitter information.

**In** some embodiments, the configuration information is configured to instruct the terminal to perform UL jitter measurement.

An embodiment of the present disclosure provides an information processing apparatus including a second sending module, configured to send a radio resource control (RRC) message to the network device, in which the RRC message includes the configuration information.

**In** some embodiments, the configuration information further indicates a granularity at which the terminal sends the UL jitter information; the granularity includes at least one of: a granularity per terminal; a granularity per quality of service (QoS) flow; or a granularity per data radio bearer (DRB).

In some embodiments, the configuration information further includes at least one of: a period of a QoS flow for UL jitter measurement; a reporting mode information indicating a reporting mode of the UL jitter information; or a parameter value of the UL jitter information.

In some embodiments, the reporting mode information includes one of:
**periodic** reporting information, indicating that the reporting mode of the UL jitter information is periodic reporting and/or a time interval of periodic reporting is a predetermined time interval; or
event reporting information, indicating that the reporting mode of the UL jitter information is event-triggered reporting and/or a triggering condition of event-triggered reporting.

In some embodiments, the trigger condition is one of the followings: the measurement value of the UL jitter reaching a predetermined threshold, the measurement value of the UL jitter changing compared with the last reported value (or measurement value), a change of the measurement value of the UL jitter compared with the last reported value (or measurement value) reaching a predetermined threshold, or a preset timer expiring.

In some embodiments, the parameter value comprises at least one of:
a measurement value of the UL jitter;
a measurement value range of the UL jitter;
the period of the QoS flow for the UL jitter measurement; or
a first indication value, indicating whether a measurement value exceeds a predetermined threshold; or
a second indication value, indicating a time relationship between a receiving time caused by the UL jitter and a reference time.

In some embodiments, the UL jitter information includes a parameter value, in which the parameter value includes at least one of: a measurement value, a measurement value range, a period of a QoS flow, a first indication value, or a second indication value.

In some embodiments, in a case that there are a plurality of target QoS flows, the measurement value includes at least one of: a maximum measurement value of the plurality of target QoS flows; a minimum measurement value of the plurality of target QoS flows; or an average measurement value of the plurality of target QoS flows.

An embodiment of the present disclosure provides an information processing apparatus including: a second receiving module 61, configured to receive second assistance information sent by the terminal, in which the second assistance information indicates at least one of:
whether the terminal has a UL jitter measurement capability; or
whether a specific service device is in a tethering scenario; in which the specific service device being in the tethering scenario indicates that the specific service device is connected to the terminal through a predetermined communication connection mode.

It should be noted that those skilled in the art can understand that the apparatus provided in embodiments of the present disclosure may be implemented alone or together with some apparatuses in embodiments of the present disclosure or some apparatuses in related technologies.

Regarding the apparatus in the above embodiment, the specific manner in which each module performs operations has been described in detail in the method embodiments, and will not be elaborated here.

Embodiments of the present disclosure provide a communication device, including: a processor, a transceiver, a memory, and an executable program stored in the memory and capable of being executed by the processor, in which the processor performs the information processing method as described above when executing the executable program.

The processor may include various types of storage media, which are non-transitory computer storage media that can continue to remember information stored thereon after the communication device loses power.

In some embodiments, the communication device includes: a terminal or a network device.

The processor may be connected to the memory via a bus or the like, and is used to read an executable program stored in the memory, for example, to perform at least one of the methods shown in FIG. 2 to FIG. 8.

An embodiment of the present disclosure provides a computer storage medium having an executable program stored thereon. When the executable program is executed by a processor, the information processing method as described above is implemented, such as at least one of the methods shown in FIG. 2 to FIG. 8.

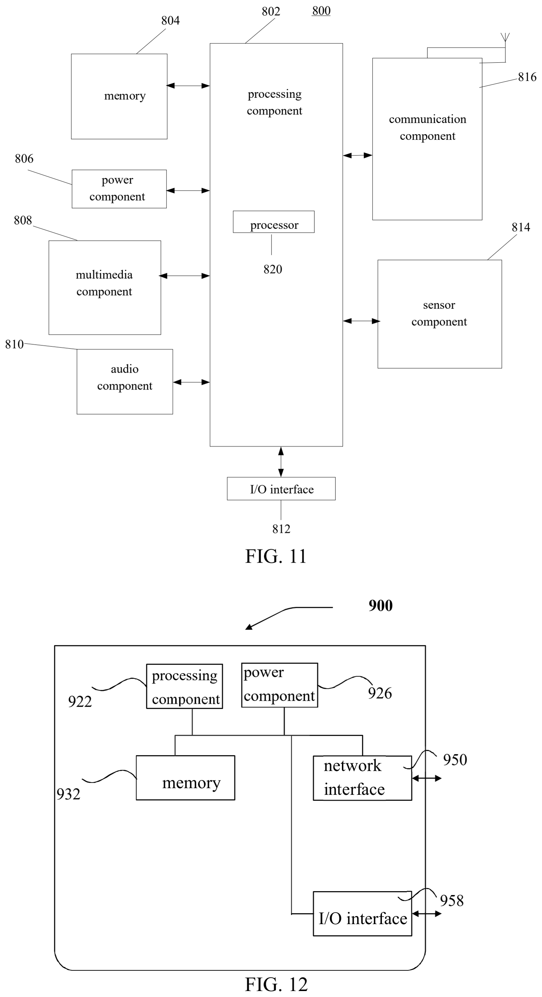

FIG. 11 is a block diagram of a UE 800 according to an embodiment. For example, the UE 800 may be a mobile phone, a computer, a digital broadcasting terminal, a message transceiver device, a game console, a tablet device, a medical device, a fitness device, and a personal digital assistant.

As illustrated in FIG. 11, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, telephone calls, data communications, camera operations, and recording operations. The processing component 802 may include one or more processors 820 to perform all or part of the steps in the above described method. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, video, etc. The memory 804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read-Only Memory (PROM), a Read Only Memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensor to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front-facing camera and/or a rear-facing camera. When the UE 800 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensor to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may also include a light sensor, such as a Complementary Metal Oxide Semiconductor (CMOS) or Charge-Coupled Device (CCD) image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the UE 800 and other devices. The UE 800 can access a wireless network based on a communication standard, such as Wi-Fi, 2G, or 3G, or a combination thereof. In an embodiment, the communication component 816 receives a broadcast signal or broadcast associated information from an external broadcast management system via a broadcast channel. In an embodiment, the communication component 816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

**In** the embodiment, the UE 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described method.

**In** the embodiments, there is also provided a non-transitory computer readable storage medium including executable instructions, such as the memory 804, executable by the processor 820 in the UE 800, for performing the above method. For example, the non-transitory computer-readable storage medium may be a ROM, a Random Access Memory (RAM), a CD-ROM, a magnetic tape, a floppy disc, and an optical data storage device.

As shown in FIG. 12, an embodiment of the present disclosure shows a structure of a communication device. For example, the communication device 900 may be provided as a network side device. The communication device may be various network elements such as the aforementioned access network element and/or network function. The communication device may be a terminal or a network device in the above-mentioned embodiments.

With reference to FIG. 12, the communication device 900 includes a processing component 922, which further includes one or more processors, and a memory resource represented by a memory 932 for storing instructions that may be executed by the processing component 922, such as an application. The application stored in the memory 932 may include one or more modules each corresponding to a set of instructions. In addition, the processing component 922 is configured to execute instructions to perform the above-mentioned method, such as the aforementioned method applied in the access network device.

The communication device 900 may also include a power component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server^{®}, Mac OS X^{®}, Unix^{®}, Linux^{®}, FreeBSD^{®}, or the like.

In the absence of contradiction, each step in a certain implementation mode or example may be implemented as an independent example, and the steps may be arbitrarily combined. For example, a solution after removing some steps in a certain implementation mode or example can also be implemented as an independent example, and the order of the steps in a certain implementation mode or example may be arbitrarily exchanged. In addition, the methods or examples in a certain implementation mode or example may be arbitrarily combined; in addition, the various implementation modes or examples may be arbitrarily combined. For example, some or all steps of different implementation modes or examples may be arbitrarily combined, and a certain implementation mode or example may be arbitrarily combined with the methods or examples of other implementation modes or examples.

Those skilled in the art will readily appreciate other embodiments of the present disclosure after considering the specification and practicing the invention disclosed herein. The present disclosure is intended to cover any variations, uses, or adaptations of the present disclosure that follow the general principles of the present disclosure and include common knowledge or customary techniques in the art that are not disclosed in the present disclosure. The description and examples are to be regarded as exemplary only, and the true scope and spirit of the present disclosure are indicated by the following claims.

It should be understood that the present disclosure is not limited to the exact structures that have been described above and shown in the drawings, and that various modifications and changes may be made without departing from the scope thereof. The scope of the present disclosure is limited only by the appended claims.

## Claims

1. An information processing method, performed by a terminal, comprising:
sending uplink (UL) jitter information to a network device, wherein the UL jitter information indicates UL jitter.

2. The method of claim 1, wherein sending the UL jitter information comprises:
sending first assistance information, wherein the first assistance information comprises the UL jitter information.

3. The method of claim 1 or 2, further comprising:
obtaining the UL jitter information.

4. The method of claim 3, further comprising:
receiving configuration information sent by the network device;
wherein obtaining the UL jitter information comprises: obtaining the UL jitter information based on the configuration information.

5. The method of claim 4, wherein sending the UL jitter information comprises:
sending the UL jitter information based on the configuration information.

6. The method of claim 4, wherein receiving the configuration information sent by the network device comprises:
receiving a radio resource control (RRC) message sent by the network device, wherein the RRC message comprises the configuration information.

7. The method of any of claims 4-6, wherein the configuration information further indicates a granularity at which the terminal sends the UL jitter information; the granularity comprises at least one of:
a granularity per terminal;
a granularity per quality of service (QoS) flow; or
a granularity per data radio bearer (DRB).

8. The method of any of claims 4-7, wherein the configuration information further comprises at least one of:
a period of a QoS flow for UL jitter measurement;
a reporting mode information indicating a reporting mode of the UL jitter information; or
a parameter value of the UL jitter information.

9. The method of claim 8, wherein the reporting mode information comprises one of:
periodic reporting information, indicating that the reporting mode of the UL jitter information is periodic reporting and/or a time interval of periodic reporting is a predetermined time interval; or
event reporting information, indicating that the reporting mode of the UL jitter information is event-triggered reporting and/or a triggering condition of event-triggered reporting.

10. The method of claim 8, wherein the parameter value comprises at least one of:
a measurement value of the UL jitter;
a measurement value range of the UL jitter;
the period of the QoS flow for the UL jitter measurement;
a first indication value, indicating whether a measurement value exceeds a predetermined threshold; or
a second indication value, indicating a time relationship between a receiving time caused by the UL jitter and a reference time.

11. The method of any of claims 1-10, wherein sending the UL jitter information comprises at least one of:
sending UL jitter information of the terminal;
sending UL jitter information of a target QoS flow;
sending UL jitter information corresponding to a target DRB; or
sending UL jitter information of at least one target QoS flow associated with a target DRB.

12. The method of any of claims 1-11, wherein sending the UL jitter information comprises at least one of:
sending the UL jitter information based on a predetermined time interval;
sending the UL jitter information based on a measurement value of the UL jitter reaching a predetermined threshold; or
sending the UL jitter information based on expiry of a preset timer.

13. The method of any of claims 1-12, wherein the UL jitter information comprises:
a parameter value, wherein the parameter value comprises at least one of: a measurement value, a measurement value range, a period of a QoS flow, a first indication value, or a second indication value.

14. The method of claim 13, wherein in a case that there are a plurality of target QoS flows, the measurement value comprises at least one of:
a maximum measurement value of the plurality of target QoS flows;
a minimum measurement value of the plurality of target QoS flows; or
an average measurement value of the plurality of target QoS flows.

15. The method of any of claims 4-14, further comprising:
uploading the configuration information to an upper layer, wherein the configuration information is used by the upper layer to perform UL jitter measurement.

16. The method of any of claims 4-6, before receiving the configuration information, further comprising:
sending second assistance information to the network device, wherein the second assistance information indicates at least one of:
whether the terminal has a UL jitter measurement capability; or
whether a specific service device is in a tethering scenario; wherein the specific service device being in the tethering scenario indicates that the specific service device is connected to the terminal through a predetermined communication connection mode.

17. An information processing method, performed by a network device, comprising:
receiving uplink (UL) jitter information sent by a terminal, wherein the UL jitter information indicates UL jitter.

18. The method of claim 17, wherein receiving the UL jitter information comprises:
receiving first assistance information sent by the terminal, wherein the first assistance information comprises the UL jitter information.

19. The method of claim 17 or 18, further comprising:
sending configuration information to the terminal, wherein the configuration information is used for the terminal to send the UL jitter information.

20. The method of claim 19, wherein sending the configuration information to the terminal comprises:
sending a radio resource control (RRC) message to the terminal, wherein the RRC message comprises the configuration information.

21. The method of claim 19 or 20, wherein the configuration information further indicates a granularity at which the terminal sends the UL jitter information; the granularity comprises at least one of:
a granularity per terminal;
a granularity per quality of service (QoS) flow;
a granularity per data radio bearer (DRB).

22. The method of any of claims 19-21, wherein the configuration information further comprises at least one of:
a period of a QoS flow for UL jitter measurement;
a reporting mode information indicating a reporting mode of the UL jitter information; or
a parameter value of the UL jitter information.

23. The method of claim 22, wherein the reporting mode information comprises one of:
periodic reporting information, indicating that the reporting mode of the UL jitter information is periodic reporting and/or a time interval of periodic reporting is a predetermined time interval; or
event reporting information, indicating that the reporting mode of the UL jitter information is event-triggered reporting and/or a triggering condition of event-triggered reporting.

24. The method of claim 23, wherein the parameter value comprises at least one of:
a measurement value of the UL jitter;
a measurement value range of the UL jitter;
the period of the QoS flow for the UL jitter measurement; or
a first indication value, indicating whether a measurement value exceeds a predetermined threshold; or
a second indication value, indicating a time relationship between a receiving time caused by the UL jitter and a reference time.

25. The method of any of claims 17-24, wherein the UL jitter information comprises:
a parameter value, wherein the parameter value comprises at least one of: a measurement value, a measurement value range, a period of a QoS flow, a first indication value, or a second indication value.

26. The method of claim 25, wherein in a case that there are a plurality of target QoS flows, the measurement value comprises at least one of:
a maximum measurement value of the plurality of target QoS flows;
a minimum measurement value of the plurality of target QoS flows; or
an average measurement value of the plurality of target QoS flows.

27. The method of claim 19 or 20, before sending the configuration information to the terminal, further comprising:
receiving second assistance information sent by the terminal, wherein the second assistance information indicates at least one of:
whether the terminal has a UL jitter measurement capability; or
whether a specific service device is in a tethering scenario; wherein the specific service device being in the tethering scenario indicates that the specific service device is connected to the terminal through a predetermined communication connection mode.

28. An information processing apparatus, comprising:
a first sending module, configured to send uplink (UL) jitter information to a network device, wherein the UL jitter information indicates UL jitter.

29. An information processing apparatus, comprising:
a second receiving module, configured to receive uplink (UL) jitter information sent by a terminal, wherein the UL jitter information indicates UL jitter.

30. A communication device, comprising a processor, a transceiver, a memory, and an executable program stored in the memory and capable of being executed by the processor, wherein the processor performs the information processing method according to any of claims 1 to 16 or any of claims 17 to 27 when executing the executable program.

31. A computer storage medium having a computer-executable program stored thereon, wherein when the computer-executable program is executed by a processor, the information processing method according to any of claims 1 to 16 or any of claims 17 to 27 is implemented.
